# EUROPEAN PATENT APPLICATION

(11) **EP 3 539 775 A1**
(43) Date of publication of application: **18.09.2019**
(21) Application number: 16921217.2
(22) Date of filing: 09.11.2016
(51) Int. Cl.: B33Y 30/00, B33Y 40/00, B33Y 50/00

(54) **HEATING AND REFRIGERATING DEVICE**

(71) Applicant: Tongtai Machine & Tool Co., Ltd., Kaohsiung City 82151 (TW)
(72) Inventor: LU, Hsuanyi, Kaohsiung 82151 (TW); CHEN, Yijhih, Kaohsiung 82151 (TW); CHEN, Hsinpao, Kaohsiung 82151 (TW); YEN, Juihsiung, Kaohsiung 82151 (TW)
(74) Representative: Patentanwälte Olbricht Buchhold Keulertz
(86) International application number: PCT/CN2016/105200
(87) International publication number: WO 2018/086009

(57) **Abstract**

A heating and refrigerating device (100) comprises a base (2), a heating unit (3), a guide unit (4), a temperature adjustment unit (5), a heat conduction bottom plate (6), and multiple refrigerating chips (9). The heating unit (3) is disposed on the base (2). The guide unit (4) is disposed on the heating unit (3). The temperature adjustment unit (5) is disposed in the guide unit (4) in a pluggable manner. The heat conduction bottom plate (6) is disposed on the guide unit (4). In the heating and refrigerating device (100), by using the design of the heating unit (3), the temperature adjustment unit (5) and the refrigerating chips (9), the effect of instant refrigeration or instant heating can be achieved.

## Description

### FIELD OF INVENTION

The present disclosure relates to a heating and cooling device, and in particular, to a heating and cooling device applied in a metal three-dimensional (3D) printing equipment.

### BACKGROUND OF INVENTION

The main technical content of three-dimensional (3D) rapid prototyping (3D printing) is to put data and raw materials into 3D printers, and a product is printed layer by layer through a powder spreading device to form a final product. 3D printing mainly includes selective laser sintering (SLS), selective laser melting (SLM), direct metal laser sintering (DMLS), electron beam melting (EBM), and other technologies. SLS uses a low-power laser to sinter low-melting polymer powder. SLM uses a high-energy beam laser to directly melt metal powder. DMLS uses a laser to sinter binary metal. EBM uses an electron beam to melt metal powder.

In the field of 3D printing, due to the different powders used, laser metal melting process equipment must heat or cool a working platform in the process according to characteristics of the powders. However, existing heating or cooling devices operate independently, and a processing board cannot be instantly heated and instantly cooled for characteristic needs. Therefore, it is prone to affect the processing efficiency of the product.

As a result, it is necessary to provide a heating and cooling device to solve the problems existing in the conventional technologies, as described above.

### SUMMARY OF THE INVENTION

An object of the present disclosure is to provide a heating and cooling device, wherein a working platform can achieve instant cooling or instant heating through the design of a heating unit and a temperature control unit.

To achieve the above objects, the present disclosure provides a heating and cooling device disposed in a metal melting equipment. The heating and cooling device comprises a base, a heating unit, a guiding unit, a temperature control unit, a conduction plate, and a plurality of thermoelectric cooling chips. The base includes a body, a recess, and a heat insulation plate, wherein the recess is formed on the body, and the heat insulation plate is accommodated in the recess. The heating unit is disposed on the base, wherein the heating unit includes a heating plate and a heating coil, and the heating coil extends through the heating plate. The guiding unit is disposed on the heating unit. The temperature control unit is pluggable and is disposed in the guiding unit, wherein the temperature control unit is spaced apart from the heating unit. The conduction plate is disposed on the guiding unit and configured to conduct heat of the heating unit or the temperature control unit to a working platform of the metal melting equipment. The thermoelectric cooling chips are arranged in a checkerboard pattern between the temperature control unit and the conduction plate.

In one embodiment of the present disclosure, the heating and cooling device further includes a heat shield configured to accommodate the base and the heating unit, and the heat shield includes a bottom wall and a surrounding wall.

In one embodiment of the present disclosure, the guiding unit includes two sliding rails disposed on opposite sides of the heating unit and configured to move the temperature control unit in the sliding rails.

In one embodiment of the present disclosure, the guiding unit includes two columns assembled on the two slide rails, respectively, and the temperature control unit includes two sliding slots cooperated with the two columns to slide, respectively.

In one embodiment of the present disclosure, the temperature control unit includes a board and a tube, and the tube is embedded in the board.

In one embodiment of the present disclosure, the conduction plate includes a plurality of plate blocks corresponding to the thermoelectric cooling chips, respectively, so that each of the thermoelectric cooling chips performs heat conduction on the corresponding plate block.

In one embodiment of the present disclosure, the board includes a plurality of board blocks corresponding to the thermoelectric cooling chips, respectively, and the temperature control unit includes a plurality of tubes disposed in the board blocks, respectively.

As described above, the conduction plate can be heated by the heating unit, and cooled by the temperature control unit, so that the working platform can reach a process of cooling or heating. In addition, since the temperature control unit is a pluggable design, it is convenient to take out the board for replacement or repair.

### DESCRIPTION OF DRAWINGS

FIG. 1 is a perspective view of a heating and cooling device according to a preferred embodiment of the present disclosure.
FIG. 2 is an exploded view of the heating and cooling device according to the preferred embodiment of the present disclosure.
FIG s. 3 to 7 are schematic views of plate blocks of the heating and cooling device being heated or cooled according to FIG. 2.

### DETAILED DESCRIPTION OF THE PREFERRED EMBODIMENTS

The structure and the technical means adopted by the present disclosure to achieve the above and other objects can be best understood by referring to the following detailed description of the preferred embodiments and the accompanying drawings. Furthermore, directional terms described by the present disclosure, such as upper, lower, front, back, left, right, inner, outer, side, longitudinal/vertical, transverse/horizontal, etc., are only directions by referring to the accompanying drawings, and thus the used directional terms are used to describe and understand the present disclosure, but the present disclosure is not limited thereto.

Referring to FIG s. 1 and 2, a heating and cooling device according to a preferred embodiment of the present disclosure is illustrated. The heating and cooling device 100 is disposed in a metal melting equipment and comprises a base 2, a heating unit 3, a guiding unit 4, a temperature control unit 5, a conduction plate 6, a heat shield 7, a plurality of temperature sensors 8, and a plurality of thermoelectric cooling chips 9. The detailed structure of each component, assembly relationships, and principles of operation in the present disclosure will be described in detail hereinafter.

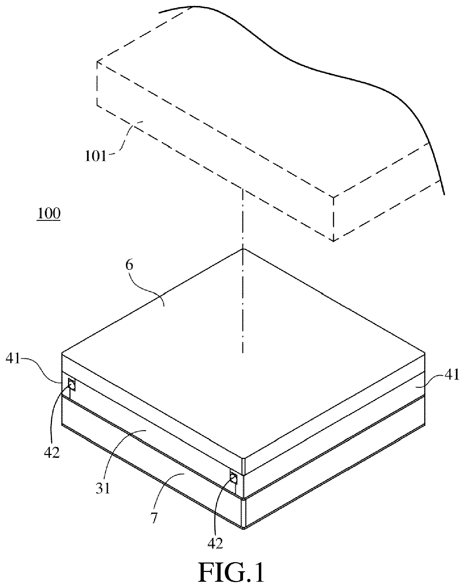

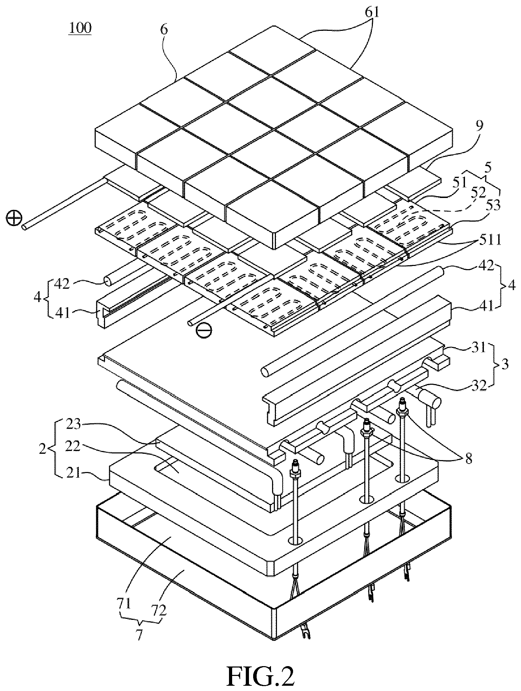

Referring to FIGs. 1 and 2, the base 2 includes a body 21, a recess 22, and a heat insulation plate 23, wherein the recess 22 is formed on the body 21, and the heat insulation plate 23 is accommodated in the recess 22. In the preferred embodiment, the recess 22 has a rectangular shape, and a surface of the body 21 is flush with a surface of the heat insulation plate 23 when the heat insulation plate 23 is placed in the recess 22.

Referring to FIGs. 1 and 2, the heating unit 3 is disposed on the base 2, and the heating unit 3 includes a heating plate 31 and a heating coil 32, wherein the heating coil 32 extends through the heating plate 31. In the preferred embodiment, the heating plate 31 includes a plurality of through passages, and the heating coil 32 is disposed in the through passages.

Referring to FIGs. 1 and 2, the guiding unit 4 is disposed on the heating unit 3, and the guiding unit 4 includes two sliding rails 41 and two columns 42, wherein the sliding rails 41 are disposed on opposite sides of the heating unit 3 and configured to move the temperature control unit 5 in the sliding rails 41, so that the temperature control unit 5 is spaced apart from the heating unit 3, and the two columns 42 assembled on an inner side of the two slide rails 41, respectively.

Referring to FIGs. 1 and 2, the temperature control unit 5 is pluggable and disposed in the guiding unit 4, and the temperature control unit 5 is spaced apart from the heating unit 3. The temperature control unit 5 includes a board 51, a tube 52, and two sliding slots 53, wherein the tube 52 is embedded in the board 51 to circulate cooling liquid. The two sliding slots 53 are formed on opposite sides of the board 51, and the two sliding slots 53 are slid and engaged with the two columns 42, respectively. It should be noted that in other embodiments, the tube 52 can also be provided with heat flow passages and cold flow passages at the same time, wherein the heat flow passages can quickly assist and uniformly heat on the heating plate 31, and the cold flow passages can achieve the effect of lowering the temperature or cooling instantly.

Referring to FIGs. 1 and 2, the conduction plate 6 is disposed on the guiding unit 4 and configured to conduct the heat of the heating plate 31 of the heating unit 3 to a working platform 101 of the metal melting equipment for increasing the temperature, or conduct the heat of the board 51 of the temperature control unit 5 to the working platform 101 of the metal melting equipment for reducing the temperature.

Referring to FIGs. 1 and 2, the heat shield 7 is configured to accommodate the base 2 and the heating unit 3, and the heat shield 7 includes a bottom wall 71 and a surrounding wall 72, wherein the surrounding wall 72 extends upward from a periphery of the bottom wall 71. In the embodiment, the bottom wall 71 and the surrounding wall 72 can completely cover the base 2 and the heating unit 3 to prevent internal heat energy from leaking out.

Referring to FIGs. 1 and 2, the temperature sensors 8 are disposed on a side of the heating plate 31 of the heating unit 3. In the embodiment, the temperature sensor 8 is equidistantly mounted on the side of the heating plate 31, so that an instant heating temperature of the heating plate 31 can be sensed by the temperature sensors 8 being in contact with the heating plate 31.

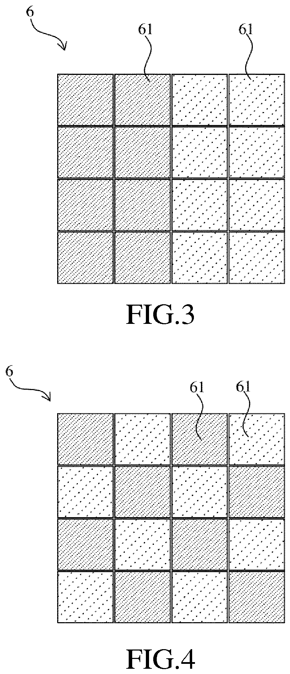

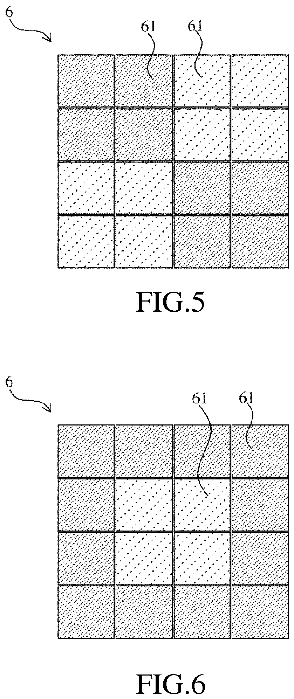

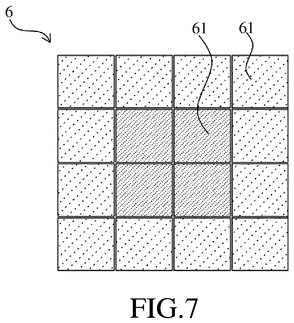

Referring to FIGs. 1 and 2, the thermoelectric cooling chips 9 are arranged in a checkerboard pattern between the board 51 of the temperature control unit 5 and the conduction plate 6. The thermoelectric cooling chips 9 can be driven by electrically connecting to a power source (now shown). In addition, the conduction plate 6 includes a plurality of plate blocks 61 corresponding to the thermoelectric cooling chips 9, respectively, so that each of the thermoelectric cooling chips 9 performs heat conduction on the corresponding plate block 61. The board 51 includes a plurality of board blocks 511 corresponding to the thermoelectric cooling chips 9, respectively, and the temperature control unit 5 includes a plurality of tubes 52 disposed in the board blocks 511, respectively. Each of the tubes 52 can be disposed as heat flow passages or cold flow passages according to actual needs, so that board blocks 511 can be adjusted to different temperatures (as shown in FIGs. 3 to 7). At the same time, each of the thermoelectric cooling chips 9 can also conduct the heat to the corresponding board blocks 511.

According to the described structure, the heating and cooling device 100 of the present disclosure can be heated by the heating plate 31 of the heating unit 3, and conduct heat to the working platform 101 through the conduction plate 6 for increasing the temperature. The heating and cooling device 100 can also be cooled by the board 51 of the temperature control unit 5, and conduct heat to the working platform 101 through the conduction plate 6 for reducing the temperature. Thus, the working platform 101 can achieve instant cooling or instant heating. In addition, since the temperature control unit 5 is a pluggable design, it is convenient to take out the board 51 for replacement or repair. The thermoelectric cooling chips 9 arranged in a checkerboard pattern and matched upper plate blocks 61 and lower board blocks 511, so that the conduction plate 6 can be cooled or heated regionally, and the different plate blocks 61 can be adjusted for temperature. Thus, the temperature difference between the cooling and heating is reached in a laser melting process on a working plane. In addition, the conduction plate 6 is divided into the plurality of plate blocks 61, so that the cooling region and the heating region do not interfere with each other, and the temperature control of different blocks is achieved.

Through the above design, the conduction plate 6 can be heated by the heating unit 3, and cooled by the temperature control unit 5, so that the working platform 101 can reach a process of cooling or heating. In addition, since the temperature control unit 5 is a pluggable design, it is convenient to take out the board 51 for replacement or repair. Since the thermoelectric cooling chips 9 are arranged in a checkerboard pattern on the board 51, and each of the thermoelectric cooling chips 9 is individually cooled or heated. Therefore, the thermoelectric cooling chips 9 can be cooled or heated regionally, thereby adjusting the temperature of different blocks. The laser melting process implemented in the work platform 101 has a difference in cooling or heating. Moreover, the temperature of the heating or cooling can also be determined in the working platform 101 according to different blocks to meet the special needs of the processing operation. In addition, the conduction plate 6 is divided into the plurality of plate blocks 61, so that the cooling region and the heating region do not interfere with each other, and the temperature control of different blocks is achieved.

As described above, the conduction plate 6 can be heated by the heating unit 3, and cooled by the temperature control unit 5, so that the working platform 101 can reach a process of cooling or heating. In addition, since the temperature control unit 5 is a pluggable design, it is convenient to take out the board 51 for replacement or repair. The thermoelectric cooling chips 9 are arranged in a checkerboard pattern, and can be cooled or heated regionally to meet the special needs of the processing operation.

The present disclosure has been described with preferred embodiments thereof and it is understood that many changes and modifications to the described embodiments can be carried out without departing from the scope and the spirit of the disclosure that is intended to be limited only by the appended claims.

## Claims

1. A heating and cooling device (100), disposed in a metal melting equipment, **characterized in that** the heating and cooling device (100) comprises:
a base (2) including a body (21), a recess (22) formed on the body (21), and a heat insulation plate (23) accommodated in the recess (22);
a heating unit (3) disposed on the base (2), wherein the heating unit (3) includes a heating plate (31) and a heating coil (32), and the heating coil (32) extends through the heating plate (31);
a guiding unit (4) disposed on the heating unit (3);
a temperature control unit (5) being pluggable and disposed in the guiding unit (4), wherein the temperature control unit (5) is spaced apart from the heating unit (3);
a conduction plate (6) disposed on the guiding unit (4) and configured to conduct heat of the heating unit (3) or the temperature control unit (5) to a working platform of the metal melting equipment; and
a plurality of thermoelectric cooling chips (9) arranged in a checkerboard pattern between the temperature control unit (5) and the conduction plate (6).

2. The heating and cooling device (100) according to claim 1, **characterized in that** the heating and cooling device (100) further includes a heat shield (7) configured to accommodate the base (2) and the heating unit (3), and the heat shield (7) includes a bottom wall (71) and a surrounding wall (72).

3. The heating and cooling device (100) according to claim 1, **characterized in that** the guiding unit (4) includes two sliding rails (41) disposed on opposite sides of the heating unit (3) and configured to move the temperature control unit (5) in the sliding rails (41).

4. The heating and cooling device (100) according to claim 3, **characterized in that** the guiding unit (4) includes two columns (42) assembled on the two slide rails, respectively, and the temperature control unit (5) includes two sliding slots (53) cooperated with the two columns (42) to slide, respectively.

5. The heating and cooling device (100) according to claim 1, **characterized in that** the temperature control unit (5) includes a board (51) and a tube (52), and the tube (52) is embedded in the board (51).

6. The heating and cooling device (100) according to claim 1, **characterized in that** the conduction plate (6) includes a plurality of plate blocks (61) corresponding to the thermoelectric cooling chips (9), respectively, so that each of the thermoelectric cooling chips (9) performs heat conduction on the corresponding plate block (61).

7. The heating and cooling device (100) according to claim 5, **characterized in that** the board (51) includes a plurality of board blocks (511) corresponding to the thermoelectric cooling chips (9), respectively, and the temperature control unit (5) includes a plurality of tubes (52) disposed in the board blocks (511), respectively.
